(19) Europäisches Patentamt
European Patent Office
Office européen des brevets

(11) Publication number: 0 123 245 B1

# (12) EUROPEAN PATENT SPECIFICATION

(45) Date of publication of patent specification: 22.11.90

(51) Int. Cl.$^5$: C 08 F 10/00, C 08 F 4/62, C 08 F 36/04, C 08 F 4/02

(21) Application number: 84104269.0

(22) Date of filing: 16.04.84

## (54) Polyolefin polymerization process and catalyst.

(30) Priority: 21.04.83 US 487393

(43) Date of publication of application: 31.10.84 Bulletin 84/44

(45) Publication of the grant of the patent: 22.11.90 Bulletin 90/47

(84) Designated Contracting States: AT BE CH DE FR GB IT LI LU NL SE

(56) References cited:
EP-A-0 060 443
GB-A-1 505 315
GB-A-2 000 514

(73) Proprietor: PHILLIPS PETROLEUM COMPANY
5th and Keeler
Bartlesville Oklahoma 74004 (US)

(72) Inventor: Masino, Albert Peter
1625 S.E. Smysor Dr.
Bartlesville, OK 74006 (US)

(74) Representative: Dost, Wolfgang, Dr.rer.nat., Dipl.-Chem. et al
Patent- und Rechtsanwälte Bardehle-Pagenberg-Dost-Altenburg & Partner Postfach 86 06 20
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 123 245 B1

## Description

EP—A—0 060 443 discloses a number of new high activity polymerization catalysts. One of these catalyst types disclosed was prepared by reacting reactants comprising (a) a magnesium dihalide, (b) a benzoic acid ester, and (c) a titanium compound, such as an alkoxytitanium compound, to produce a first catalyst component, then reacting that component with a second catalyst component comprising a precipitating agent, and then reacting the resulting solid product with a halogenating agent, such as $TiCl_4$.

The present application is directed to the discovery that the activity of such catalysts can also be improved by adding specified amounts of methanol to the magnesium dihalide.

Summary of the Invention

The catalyst preparation involves reacting (1) a magnesium dihalide being associated with 0.48 to 1.1 mole of methanol per mole of magnesium dihalide, (2) a benzoic acid ester, and (3) an alkoxytitanium compound to form a first catalyst component, then reacting said first catalyst component with (4) an organoaluminum halide to obtain a solid product, and then reacting the resulting solid product with a halogenating agent comprising a titanium halide.

Detailed Description of the Invention

The presently preferred magnesium dihalide is "anhydrous" magnesium dichloride. The term "anhydrous" magnesium dichloride is conventionally used to indicate a magnesium dichloride containing no more than about 1 mole of water per mole of magnesium dichloride. The benefits provided by adding methanol to the magnesium dichloride in accordance with the present invention are greatest when the magnesium dichloride contains less than about 0.5 mole of water per mole of magnesium dichloride and is substantially free of organic compounds. The level of water can be determined using routine analysis techniques. Typically, such techniques involve the use of Karl Fischer titration plus other conventional techniques such as X-ray diffraction and elemental analysis for determining whether there are significant amounts of other materials, particularly MgO, associated with the $MgCl_2$.

The methanol is added in an amount which will provide from 0.48 to 1.1 moles of methanol per mole of magnesium dihalide.

The alkoxytitanium compounds are those titanium compounds in which the titanium is bonded to at least one oxygen atom and the oxygen atom is bonded to at least one alkyl radical. The preferred alkoxytitanium compounds are those of the formula

$$Ti(OR)_4$$

wherein each R is individually selected from an alkyl group containing 1 to 20 carbon atoms and each R can be the same or different. The most preferred are those in which each alkyl group contains 1 to 10 carbon atoms.

The molar ratio of the alkoxytitanium compound to the metal halide compound can be selected over a relatively broad range. Generally, the molar ratio of alkoxytitanium to magnesium dihalide is in the range of 10/1 to 1/10, more preferably 2/1 to 1/2.

The term benzoic acid ester is used generically to include substituted as well as unsubstituted benzoic acid esters. Typical examples include ethyl benzoate, ethyl p-methoxybenzoate, ethyl toluate ethyl p-butoxybenzoate, and butyl benzoate. The preferred benzoic acid esters are those having 8 to 12 carbon atoms per molecule.

In an especially preferred embodiment, a phenol is employed in conjunction with the benzoic acid ester in making the first catalyst component. The term "phenol" is used herein to refer to substituted as well as unsubstituted phenols. Typical examples include phenol, o-methyl phenol, m-methyl phenol, p-methyl phenol, 4-phenyl phenol, o-fluorophenol, m-fluorophenol, p-fluorophenol, p-sec-butyl phenol, p-ethyl phenol, p-isopropyl phenol, p-tertbutyl phenol, p-methoxy phenol, p-cyanophenol, and p-nitrophenol.

The currently preferred combination of ester and phenol is 4-phenyl phenol and ethyl benzoate. The total number of moles of 4-phenyl and ethyl benzoate employed can affect the activity and selectivity of the resulting catalyst. Typically, the ratio of the sum of the moles of those two electron donors to the moles of the titanium alkoxide are in the range of 5/1 to 1/5, more preferably 3/1 to 2/1. Most preferably $\frac{1}{2}$ mole of ethyl benzoate is employed per mole of titanium alkoxide.

The metal halide compound and the transition metal compound employed in the present invention are normally mixed together by heating, e.g., refluxing, in a suitable dry (essential absence of water) solvent or diluent, which is essentially inert to these components and the product produced. By the term "inert" is meant that the solvent does not chemically react with the dissolved components such as to interfere with the formation of the product or the stability of the product once it is formed. Such solvents or diluents include, for example, n-pentane, n-heptane, methylcyclohexane, toluene and xylenes. It is emphasized that aromatic solvents are preferred, such as for example xylene because the solubility of the metal halide compound and the transition metal compound is higher in aromatic solvents as compared to aliphatic solvents, particularly at low temperatures. Such mixing temperatures are generally within the range of from 0 to 50°C and preferably from 10 to 30°C. Generally the amount of solvent or diluent employed can be

selected over a broad range. Usually the amount of solvent or diluent is within the range of 20 to 100 ml per gram of metal dihalide. The temperature employed during the heating step can also be selected over a broad range. Normally the heating temperature is within the range of 15 to 150°C when the heating step is carried out at atmospheric pressure. Obviously, the heating temperatures employed could be higher if the pressure employed is above atmospheric pressure. The pressure employed during the heating step does not appear to be a significant parameter.

Generally, the time required for heating the reactants to make the first catalyst component is within the range of 5 minutes to 10 hours, although in most instances a time within the range of 15 minutes to 3 hours is sufficient.

The organoaluminum halide catalyst component is selected from compounds of the type having the formula $AlR_nX_{3-n}$ wherein each R is individually selected from saturated and unsaturated hydrocarbyl radicals containing 1 to 20 carbon atoms per radical, X is a halogen, and n is any number such that $1 \leq n \leq 2$. Typical examples include ethylaluminum dichloride, diethylaluminum chloride, and ethylaluminum sesquichloride. The latter compound is currently preferred.

The reaction of the organoaluminum halide with the first catalyst component can be carried out by merely adding the organoaluminum halide to a solution of the first component. It is, however, currently preferred to add a hydrocarbon solution of the halide to the first component solution.

The temperature employed for reacting the second catalyst component, i.e., the organoaluminum halide, and the first catalyst component can be selected over a broad range. Generally, the temperature employed is within the range of 0 to 50°C or higher, while temperatures within the range of 20 to 30°C were most often employed. Since heat is evolved when the first catalyst component and the second catalyst component are mixed, the mixing rate is adjusted as required and additional cooling is employed in order to maintain a relatively constant mixing temperature. It has been found preferable to add the second component to the first component. After completing the mixing, the resulting slurry is stirred or agitated for a sufficient time, generally within a range of 15 minutes to 5 hours to insure that mixing of the components is complete. Thereafter, stirring is discontinued and the solid product recovered by filtration or decantation, for example. The product is then washed with a suitable material such as a hydrocarbon, e.g., n-pentane, n-heptane, cyclohexane, benzene or xylenes, to remove any soluble material which may be present. The product is then dried and stored under dry nitrogen.

The molar ratio of the transition metal compound of the first catalyst component to the second catalyst component can be selected over a relatively broad range. Generally, the molar ratio of the transition metal of the first catalyst component to the second catalyst component is within a range of from 10:1 to 1:10 and more generally within a range of 2:1 to 1:3 since a molar ratio within the latter range usually produces a catalyst which can be employed as an especially active olefin polymerization catalyst.

Generally, the reaction between solid product resulting from the reaction of the first and second components with the halide ion exchanging source can be carried out neat or in a liquid medium in which the halide ion exchanging source is soluble. The product from step (2) is generally in a liquid diluent when contacted with the halide ion exchanging source. Any suitable diluent can be employed. Examples include normally liquid hydrocarbons such as n-pentane, n-heptane, cyclohexane, benzene, and xylene.

The temperature employed in step (3) can be selected over a relatively broad range, generally in the range of −25 to +250°C, preferably 0 to 200°C, with temperatures of 100°C being most preferred.

The treating time can also be selected over a broad range and generally is within the range of 10 minutes to 10 hours. While the weight ratio of the halide ion exchanging source to the product of step (2) can be selected over a relatively broad range, the weight ratio of the halide ion exchanging source to the product of step (2) is generally within a range of 10:1 to 1:10 and more generally from 7:1 to 1:4. Following the treatment of the product of step (2) with the halide ion exchanging source the surplus halide ion exchanging source is removed by washing the solid catalyst with a dry (essential absence of water) liquid such as a hydrocarbon of the type previously disclosed, n-hexane, or xylene for example. The resulting catalyst, after drying, is stored under nitrogen.

The currently preferred titanium halide for use as the halide ion exchanging source is $TiCl_4$. In an especially preferred embodiment, the $TiCl_4$ is employed in conjunction with a halide of silicon such as $HSiCl_3$ or $SiCl_4$.

Generally, $HSiCl_3$ and $SiCl_4$ are employed in such amounts that the sum of their volumes is about equal to the volume of the $TiCl_4$. Typically, the molar ratio of $TiCl_4$to $SiCl_4$ would preferably be in the range of 3/1 to 4.5/1 and the molar ratio of $HSiCl_3$ to $SiCl_4$ in the range of 2.5/1 to 4/1.

The methanol can be combined with the magnesium dihalide in any suitable manner. Typically the magnesium compound is just mixed with a hydrocarbon solution or dispersion of the methanol. This generally results in a swelling of the magnesium compound which appears to go into solution more readily when combined with the titanium alkoxide.

The catalyst of the present invention can be used in the polymerization of olefins. Olefins which can be homopolymerized or copolymerized with the invention catalysts include aliphatic mono-1-olefins. While the invention would appear to be suitable for use with any aliphatic mono-1-olefin, those olefins having 2 to 18 carbon atoms are most often used. The mono-1-olefins can be polymerized according to the present invention employing either a particle form process, a gas phase process, or a solution form process. Aliphatic mono-1-olefins can be copolymerized with other 1-olefins and/or with other smaller amounts of

other ethylenically unsaturated monomers, such as 1,3-butadiene, isoprene, 1,3-pentadiene, styrene, alpha-methylstyrene, and similar ethylenically unsaturated monomers which do not impair the catalyst.

The catalysts of this invention can also be utilized to prepare homopolymers and copolymers of conjugated diolefins. Generally the conjugated diolefins contain 4 to 8 carbon atoms per molecule. Examples of suitable conjugated diolefins include 1,3-butadiene, isoprene, 2-methyl-1,3-butadiene, 1,3-pentadiene, and 1,3-octadiene. Suitable comonomers, besides the conjugated diolefins listed above include mono-1-olefins previously described and vinylaromatic compounds generally. Some suitable vinylaromatic compounds are those having from 8 to 14 carbon atoms per molecule, and include for example styrene and various alkylstyrenes, such as 4-ethylstyrene and such as 1-vinylnaphthalene.

The weight percent of the conjugated diolefin in the copolymerization mixture can be selected over a relatively broad range. Generally the weight percent of the conjugated diolefin is from 10 to 95 weight percent and the other comonomers are from 90 to 5 weight percent. However, the weight percent of the conjugated diolefin is preferably from 50 to 90 weight percent and the other comonomers are from 50 to 10 weight percent.

The inventive catalysts are particularly well suited for producing stereoregular polypropylene, many offering potential for high rates as well as low soluble polymer formation.

Polymerization may be conducted in a liquid phase, in the presence or absence of an inert hydrocarbon diluent, or in a gas phase. In the polymerization of propylene, particularly satisfactory results have been attained operating in the presence of an aliphatic or aromatic hydrocarbon diluent, liquid under the polymerization conditions, such as propylene, toluene or gasoline.

While it may not be necessary in all instances to employ a cocatalyst with the catalyst of the present invention, the use of cocatalysts is recommended for best results. The organometallic cocatalysts suitable for use in accordance with the invention can be selected from among the hydrides and organometallic compounds of metals of Groups IA, II, and IIIA of the Periodic Table. Of the organometallic cocatalysts, organoaluminum compounds such as those described above as suitable for use as the second component of the catalyst, are preferred with the most preferred organoaluminum cocatalysts being compounds of the formula $R_3Al$ which include, for example, trimethylaluminum, triethylaluminum, triisopropylaluminum, tridecylaluminum, trieicosylaluminum, tricyclohexylaluminum, triphenylaluminum, 2-methylpentyldiethylaluminum, and triisoprenylaluminum. Triethylaluminum is preferred since this compound produced excellent results in the runs hereafter dfescribed.

The molar ratio of the organometallic compound of the cocatalyst to the transition metal compound of the first catalyst component is not particularly critical and can be selected over a relatively broad range. Generally, the molar ratio of the organometallic compound of the cocatalyst to the transition metal compound of the first catalyst component is within a range of 1:1 to 1500:1. For catalyst systems wherein the cocatalyst comprises at least one organoaluminum compound typically there is employed 0.25 to 15 milligrams of the titanium-containing component per mmole of organoaluminum cocatalyst.

The catalyst is preferably used with a multicomponent cocatalyst system comprising triethylaluminum (TEA), an aromatic ester such as ethyl anisate (EA), ethyl benzoate (EB), methyl-p-toluate (MPT), etc., and diethylaluminum chloride. Best selectivity (stereospecificity) is obtained when the TEA:ester mole ratio is about 2:1. The DEAC, when used, helps in increasing activity. Generally, a TEA:ester:DEAC mole ratio ranging from about 2:1:0.5—3 and preferably about 2:1:2 is employed in bench scale testing for batch polymerization. For a continuous, larger scale process, it becomes possible, for example, when using TEA and MPT to use TEA:MPT mole ratios of 3:1 to 5:1 and dispense with the DEAC entirely. A decreased DEAC level is desirable when employing a flash process to recover polymer since the amount of chloride remaining in the polymer is dependent to some extent on the DEAC level.

The polymerization process according to the present invention employing the catalysts and cocatalysts as above described can be performed either batchwise or continuously. In a batch process, for example, a stirred autoclave is prepared by first purging with nitrogen and then with a suitable compound, such as isobutane for example. When the catalyst and cocatalyst are employed either can be charged to the reactor first or they can be charged simultaneously through an entry port under an isobutane purge. After closing the entry port, hydrogen, if used, is added, and then a diluent such as isobutane is added to the reactor. The reactor is heated to the desired reaction temperature, which for polymerizing ethylene, for example, is, for best results, generally within a range of 50 to 120°C and the monomer is then admitted and maintained at a partial pressure within a range of 0.5 to 5.0 MPa (70—725 psig) for best results. At the end of the designated reaction period, the polymerization reaction is terminated and the unreacted olefin and isobutane are vented. The reactor is opened and the polymer, such as polyethylene, is collected as a free-flowing white solid and is dried to obtain the product.

In a continuous process, for example, a suitable reactor such as a loop reactor is continuously charged with suitable quantities of solvent or diluent, catalyst, cocatalyst, polymerizable compounds and hydrogen, if any, and in any desirable order. The reactor product is continuously withdrawn and the polymer recovered as appropriate, generally by flashing the diluent (solvent) and unreacted monomers and drying the resulting polymer.

For optimum productivity of polymer of low solubility in the continuous polymerization of propylene preferably the cocatalyst comprising the trialkylaluminum-electron donor is contacted with the titanium-containing catalyst prior to being exposed to liquid propylene.

The olefin polymers made with the catalysts of this invention are useful in preparing articles by conventional polyolefin processing techniques such as injection molding, rotational molding, extrusion of film, and the like.

A further understanding of the present invention and its advantages will be provided by the following examples.

Example I

All operations were conducted in a dry box containing an argon or nitrogen atmosphere or in containers containing such inert atmosphere unless indicated otherwise. A series of various $MgCl_2$·methanol adducts was prepared in separate one quart beverage bottles from mixtures containing 19.8 g (0.208 mole) of particulate commercially obtained anhydrous $MgCl_2$ (shown by analysis for water content by the Karl Fischer method to contain about 0.5 weight percent water, thus giving an empirical formula of $MgCl_2.0.03\ H_2O$), the specified quantities of reagent grade methanol and 150 ml of reagent grade mixed xylenes. Each mixture was stirred at about 23°C for 15 hours. To each bottle was charged 25.0 g (0.147 mole) of 4-phenylphenol, hereafter referred to as 4-PP, and 35.8 g (0.105 mole) of titanium tetra-n-butoxide, hereafter referred to as $Ti(OBu)_4$. The stirred reaction mixtures were heated for 15 minutes at 100°C and to each was then added 7.89 g (0.053 mole) of ethyl benzoate, EB. Stirring and heating were then continued an additional 45 minutes at 100°C. Heating and stirring were discontinued and each reaction mixture was diluted with 500 ml of xylene at about 25°C. While stirring, each mixture was treated with 125 ml (0.099 mole) of etylaluminum sesquichloride, EASC, as a 25.4 weight percent solution of EASC in n-heptane. The resulting precipitates (I) were isolated by suction filtration and a 20 g portion of each was treated with 720 g of a mixture consisting of about 56 weight percent $TiCl_4$, 32 weight percent $HSiCl_3$ and 12 weight percent $SiCl_4$. Each resulting product was isolated by suction filtration, washed repeatedly with portions of n-hexane until the filtrate was essentially colorless and dried under an argon stream to obtain the catalyst (II). A control catalyst produced with $MGCl_2.0.05\ H_2O$ and no methanol was prepared as outlined above. The quantities of methanol employed, when used, and the results obtained are given in Table IA. Analyzed catalyst compositions, minus combined oxygen and hydrocarbon groups, is given in Table IB.

In producing the catalyst, the respective mole ratios based on $MgCl_2$ as 1 were: 1.0 $MgCl_2$, 0.5 $Ti(OBu)_4$, 0.7 4-PP and 0.25 EB. The mole rati of $Ti(OBu)_4$ to EASC was about 1.05:1.

TABLE IA
Catalytic Preparation

| Run No. | Methanol g | Calculated Moles $CH_3OH$ Per Mole $MgCl_2$ | Part I Solids | | Part II Solids (Catalyst) (a) | |
|---|---|---|---|---|---|---|
| | | | Color | Weight g | Color | Weight g |
| 1A(i) | 3.2 | 0.48 | Yellow | 35.0 | Purple | 15.5 |
| 2A(i) | 6.4 | 0.96 | Yellow | 41.5 | Purple | 16.2 |
| 3A(c) | 9.6 | 1.4 | Yellow | 52.3 | Light Purple | 12.4 |
| 4A(c) | 12.8 | 1.9 | Yellow | 69.4 | Light Purple | 5.1 |
| 5A(c) | 0 | 0 | Yellow | 38.2 | Light Purple | 17.4 |

(a) Based on treating 20 g of part I solids with the $TiCl_4$-$SiCl_4$-$HSiCl_3$ mixture.
(i) Invention.
(c) Control.

TABLE IB
Analyzed Catalyst Compositions

| Catalyst No. | Weight Percent(a) | | | | |
|---|---|---|---|---|---|
| | Ti | Mg | Cl | Al | Si |
| 1B(i) | 2.59 | 15.6 | 57.8 | 1.58 | 0.045 |
| 2B(i) | 2.98 | 15.3 | 56.9 | 1.80 | 0.028 |
| 3B(c) | 2.42 | 16.3 | 57.9 | 3.49 | 0.29 |
| 4B(c) | 2.52 | 16.5 | 61.7 | 3.97 | 0.54 |
| 5B(c) | 4.24 | 17.1 | 57.4 | 0.044 | 0.050 |

(a) The balance of each composition contains combined oxygen and hydrocarbon radicals.
(i) and (c) See Table IA

A portion of each dry catalyst was employed in the production of polypropylene in a stirred, stainless steel liter reactor in one hour runs in liquid propylene under liquid full conditions at 70°C in the presence of kPa gauge (10 psig) hydrogen. The cocatalyst used in each run comprised 2.00 mmole of triethylaluminum (3.23 ml of 0.62 M TEA in n-heptane), 1.10 mmole of ethyl anisate and 2.00 mmole of diethylaluminum chloride (DEAC) (3.36 ml of 0.596 M DEAC in n-heptane). Each run was terminated after 1 hour and total polymer yield (reactor solids plus propylene-soluble polymer) was determined. Flexural modulus was determined in accordance with ASTM D790. The results are given in Table IC.

TABLE IC
Propylene Polymerization, 70°C, 1 Hour, Hydrogen Present

| Run No. | Calculated Mole $CH_3OH$ Per Mole $MgCl_2$ | Catalyst Weight mg | Total Polymer Yield g | Total Productivity Kg/g/hr | Polymer Solubles, Wt. % Propylene | Polymer Solubles, Wt. % Xylene | Polymer Flexural Modulus MPa |
|---|---|---|---|---|---|---|---|
| 1B[i] | 0.48 | 5.2 | 66.6 | 12.8 | 1.4 | 2.1 | 1415 |
| 2B[i] | 0.96 | 9.8 | 76.9 | 7.85 | —[(a)] | 3.5 | 1420 |
| 3B[c] | 1.4 | 13.3 | 18.7 | 1.41 | — | 5.1 | — |
| 4B[c] | 1.9 | 14.0 | 34.5 | 2.46 | 3.7 | 5.4 | — |
| 5B[c] | 0 | 19.6 | 46.2 | 2.36 | 3.3 | 3.5 | 1450 |

(a) A dash "—" signifies not determined.
(i) and (c) see Table IA.

The results show that catalysts based on "anhydrous" $MgCl_2$, e.g., $MgCl_2$ containing about 0.05 mole $H_2O$ or less per mole $MgCl_2$ or $MgCl_2$.n $CH_3OH$ where n is greater than about 1.4 are about equivalent in performance based on productivity values, e.g. about 1.4 to 2.5 kg polymer per g catalyst per hour. However, when n is from 0.48 to 1.1 such as in runs 1B and 2B, catalyst produced with such adducts shows an unexpected and substantial increase in productivity, e.g. about 3-to-5-fold better. Also, such invention catalysts produce polypropylene which is about 96 to 98 percent insoluble in xylene and which is quite suitable for film, fiber and the like.

Example II

Catalyst was prepared in a 30 gallon (113 l) Pfaudler reactor under a nitrogen blanket.

The reactor was charged at about 25°C with 7.2 gal (27.2 l) of the mixed xylenes and 963.7 g (10.12 moles) of commercially obtained $MgCl_2$ containing 1.4 weight percent water as determined by the Karl Fischer method, corresponding to the formula $MgCl_2$.0.08 $H_2O$. While stirring, a mixture of 360 ml of the xylenes and 360 ml (285 g, 8.90 moles) of methanol was added over a 10 minute period and the resulting mixture was heated to 40—45°C for 80 minutes. The calculated $MgCl_2$ to $CH_3OH$ mole ratio is about 1:0.9. The mixture was cooled to about 30°C and then 1269.9 g (7.46 moles) of 4-PP and 1723.7 g (5.06 moles) of $Ti(OBu)_4$ was added with stirring. The mixture was heated to 90°C—100°C for 15 minutes, 362.9 g (2.42 moles) of EB was added and the stirred mixture heated at that temperature for 45 minutes more. The reactor was then cooled to about 50°C and over a 54 minute period, 10.4 lbs of 25.4 weight percent EASC in n-heptane (4.90 moles EASC) was added with stirring. The resulting mixture was stirred an additional 45 minutes and then cooled to about 30°C. Five gal (18.9 l) of n-hexane was added to the stirred mixture, then the mixture was allowed to settle. The mother liquor was decanted from the precipitate and the precipitate was washed 4 times with 15 gal (57 l) portions of n-hexane by stirring the mixture, allowing the solids to settle and decanting the wash liquor. The reactor was then charged with 31 lbs (14 kg) of a mixture consisting of 54 weight percent $TiCl_4$, 14 weight percent $SiCl_4$ and 32 weight percent $HSiCl_3$. The reactor was heated for 1 hour at 90°—100°C with stirring. The mixture was then cooled to about 30°C, 5 gal (18.9 l) of n-hexane was added, mixed, the solids allowed to settle and the mother liquor decanted. The solids were washed 6 times with 15 gal (56.5 l) portions of n-hexane as above and the catalyst transferred to a receiver for storage as a slurry.

The calculated mole ratios based on $MgCl_2$ as 1 are: 1.0 $MgCl_2$, 0.50 $Ti(OBu)_4$, 0.74 4-PP and 0.24 EB. A portion of the catalyst slurry was dried for analysis of the components and for use in testing polymerization of propylene. Analysis disclosed that the catalyst consisted of 2.0 weight percent Ti, 22.2 weight percent Mg, 62.8 weight percent Cl with the balance being combined oxygen and hydrocarbon groups and Si.

Using the same general procedure described before, individual samples of the dry catalyst were employed in propylene polymerization for 1 hour at 70°C in liquid propylene under liquid full conditions using a 1 gallon (3.77 l) stainless steel stirred reactor. The cocatalyst system employed was TEA, as a 15 weight percent solution in n-heptane premixed with the specified amount of methyl p-toluate (MPT) as about a 33 weight percent solution in n-hexane, and when employed, DEAC as a 25 weight percent solution in n-heptane. In each run, 7.54 mmoles of TEA was used, corresponding to 2 mmoles TEA per liter of reactor contents, e.g. 8.2 ml of the TEA solution per run. Each run was conducted in the presence of 207 delta kPa hydrogen (30 delta psi hydrogen) supplied from a pressurized 360 ml vessel, the hydrogen being charged after the cocatalyst system but before the reactor was charged with 3 l of liquid propylene. Each

run began when the reactor temperature reached 70°C and the reactor was liquid full. The nominal reactor pressure at this time was about 4.24 MPa (615 psia). The quantity of catalyst used in each run, the mole ratio of TEA-MPT-DEAC employed and the results obtained are given in Table II.

TABLE II

Propylene Polymerization, 70°C, 1 hour, 207 delta kPa Hydrogen Calculated Catalyst Productivity, Kg/g/hr

| Run No. | Catalyst Weight mg | Catalyst Mole Ratio | | | Total | Total Less Propylene Solubles | Weight % Solubles | | Polymer Properties | |
|---|---|---|---|---|---|---|---|---|---|---|
| | | TEA | MPT | DEAC | | | Propylene | Xylene | Melt Flow g/10 min. | Flexural Modulus MPa |
| 6 | 23.3 | 2 | 1 | 2 | 15.3 | 15.2 | 0.9 | 2.2 | — | 1626 |
| 7 | 19.6 | 2 | 1 | 2 | 18.0 | 17.8 | 1.1 | 2.0 | 6.6 | 1769 |
| 8 | 17.1 | 3 | 1 | 3 | 27.3 | 26.9 | 1.3 | 3.8 | 6.3 | 1655 |
| 9 | 18.6 | 1.5 | 1 | 1.5 | 11.5 | 11.4 | 1.2 | 1.8 | 4.9 | 1869 |
| 10 | 14.2 | 4 | 1 | 4 | 32.1 | 31.5 | 1.7 | 3.6 | 7.4 | 1442 |
| 11 | 20.3 | 1 | 1 | 1 | 5.38 | 5.27 | 2.1 | 1.8 | 3.6 | 1766 |
| 12 | 10.4 | 2 | 1 | 1 | 15.1 | 14.9 | 1.0 | 2.5 | 3.3 | 1567 |
| 13 | 15.8 | 2 | 1 | 0.5 | 9.75 | 9.62 | 1.3 | 2.3 | 1.2 | 1471 |
| 14 | 19.5 | 2 | 1 | 0 | 3.13 | 3.08 | 1.6 | 2.1 | — | 1576 |

Notes: Run 6 conducted with dry catalyst as received.
Runs 7—14 conducted with catalyst sieved through 0.105 mm (140 mesh) screen.

The results in Table II are representative of the range in values obtained with the Ti-Mg catalyst of this invention (methanol to magnesium chloride molar ratio is about 0.5:1) using various cocatalyst systems. A presently preferred cocatalyst system is TEA-MPT-DEAC in the respective mole ratio of 2:1:2 with the concentration of TEA per liter of reactor contents normally being about 2 mmoles. Runs 6 and 7 are considered to be "standard" runs in this series, e.g., high catalyst productivity is coupled with low solubles and high flexural modulus. Active catalyst systems are obtained with other cocatalyst mole ratios as well. Runs 8 and 10 are illustrative of the effects of increasing the cocatalyst mole ratio of 2:1:2 to 3:1:3 and 4:1:4, while holding the TEA and DEAC mole ratios constant. Thus, catalyst total productivity increased from about 15—18 kg polymer per g catalyst per hour to about 27—32 kg polymer per g catalyst per hour. However, this is accompanied by increasing slightly the propylene and xylene soluble polymer produced which in turn slightly decreases the flexural modulus of the polymer. A goal is to obtain the highest possible flexural modulus values along with the best catalyst productivity possible. The effects of decreasing the cocatalyst mole ratio of 2:1:2 to 1.5:1:1.5 and 1:1:1, while holding the TEA and DEAC concentrations constant, on catalyst productivity is shown in Runs 9 and 11. Thus, catalyst total productivity is decreased from about 15—18 kg polymer per g solid catalyst per hour to about 11.5 to about 5.4 kg polymer per g solid catalyst per hour, respectively.

The effect of altering the mole ratio of DEAC in the cocatalyst system from zero to 1 while maintaining a constant 2:1 mole ratio of TEA:MPT is shown in Runs 12, 13 and 14. Thus, as the DEAC mole ratio is decreased from 2 to 1 to 0.5 to zero, total catalyst productivity decreases. The decrease is slight at the 2:1:1 TEA:MPT:DEAC mole ratio with a slight increase in propylene and xylene solubles. However, when the DEAC mole ratio is lowered to 0.5, total catalyst productivity sharply decreases to about 10 kg polymer per g solid catalyst per hour. When no DEAC is employed as in Run 14, total catalyst productivity is again sharply decreased to about 3 kg polymer per g solid catalyst per hour.

## Claims

1. A process for preparing a catalyst suitable for the polymerization of olefins comprising reacting (1) a magnesium dihalide (2) a benzoic acid ester, and (3) an alkoxytitanium compound to form a first catalyst component, and then reacting said first catalyst component with (4) an organoaluminum halide, and then reacting the resulting solid product with (5) a halogenating agent comprising a titanium halide, characterized in that said magnesium dihalide (1) is associated with 0.48 to 1.1 moles of methanol per mole of magnesium dihalide.

2. The process of claim 1 characterized in that a phenol (6) is also employed in the production of said first catalyst component.

3. The process of claim 2 characterized in that said phenol (6) is 4-phenylphenol.

4. The process of any of the preceding claims characterized in that said alkoxytitanium compound (3) is a compound of the formula $Ti(OR)_4$ wherein each R is individually selected from alkyl groups containing 1 to 20 carbon atoms.

5. The process of claim 4 characterized in that said alkoxy titanium compound (3) is titanium tetra-n-butoxide.

6. The process of any of the preceding claims characterized in that said organoaluminum halide (4) is ethyl aluminum sesquichloride.

7. The process of any of the preceding claims characterized in that said benzoic acid ester (2) is ethyl benzoate.

8. The process of any of the preceding claims characterized in that said halogenating agent (5) is titanium tetrachloride.

9. The process of claim 1 characterized in that said halogenating agent (5) is selected from $TiCl_4$, $HSiCl_3$ and $SiCl_4$.

10. The process of claim 9 characterized in that the molar ratio of $TiCl_4$ to $SiCl_4$ is in the range of 3/1 to 4.5/1 and the molar ratio of $HSiCl_3$ to $SiCl_4$ is in the range of 2.5/1 to 4/1.

11. The process of any of the preceding claims characterized in that said magnesium dihalide (1) is magnesium dichloride.

12. The process of any of claims 3, 5, 7 and 11 characterized in that said $MgCl_2$ (1) is contacted with said 4-phenylphenol (6) and said titanium tetra-n-butoxide (3) before being contacted with said ethyl benzoate (2).

13. Use of the catalyst as obtained in any of claims 1 to 12 for the polymerization of alpha olefins, in particular for producing polypropylene.

## Patentansprüche

1. Verfahren zur Herstellung eines Katalysators, der sich zur Polymerisation von Olefinen eignet, umfassend die Umsetzung von (1) einem Magnesiumdihalogenid, (2) einem Benzoesäureester und (3) einer Alkoxytitanverbindung unter Bildung einer ersten Katalysatorkomponente und die anschließende Umsetzung der ersten Katalysatorkomponente mit (4) einem Organoaluminiumhalogenid und die

anschließende Umsetzung des erhaltenen festen Produkts mit (5) einem Halogenierungsmittel mit einem Gehalt an einem Titanhalogenid, dadurch gekennzeichnet, daß das Magnesiumdihalogenid (1) mit 0,48 bis 1,1 Mol Methanol pro Mol des Magnesiumdihalogenids assoziiert ist.

2. Verfahren nach Anspruch 1, dadurch gekennzeichnet, daß ferner ein Phenol (6) bei der Herstellung der ersten Katalysatorkomponente verwendet wird.

3. Verfahren nach Anspruch 2, dadurch gekennzeichnet, daß es sich bei dem Phenol (6) um 4-Phenylphenol handelt.

4. Verfahren nach einem der vorstehenden Ansprüche, dadruch gekennzeichnet, daß es sich bei der Alkoxytitanverbindung (3) um eine Verbindung der Formel $Ti(OR)_4$ handelt, in der die einzelnen Reste R individuell unter Alkylresten mit 1 bis 20 Kohlenstoffatomen ausgewählt sind.

5. Verfahren nach Anspruch 4, dadurch gekennzeichnet, daß es sich bei der Alkoxytitanverbindung (3) um Titantetra-n-butoxid handelt.

6. Verfahren nach einem der vorstehenden Ansprüche, dadurch gekennzeichnet, daß es sich bei dem Organoaluminiumhalogenid (4) um Ethylaluminiumsesquichlorid handelt.

7. Verfahren nach einem der vorstehenden Ansprüche, dadurch gekennzeichnet, daß es sich bei dem Benzoesäureester (2) um Ethylbenzoat handelt.

8. Verfahren nach einem der vorstehenden Ansprüche, dadurch gekennzeichnet, daß es sich bei dem Halogenierungsmittel (5) um Titantetrachlorid handelt.

9. Verfahren nach Anspruch 1, dadurch gekennzeichnet, daß das Halogenierungsmittel (5) unter $TiCl_4$, $HSiCl_3$ und $SiCl_4$ ausgewählt ist.

10. Verfahren nach Anspruch 9, dadurch gekennzeichnet, daß das Molverhältnis von $TiCl_4$ zu $SiCl_4$ im Bereich von 3/1 bis 4,5/1 und das Molverhältnis von $HSiCl_3$ zu $SiCl_4$ im Bereich von 2,5/1 bis 4/1 liegt.

11. Verfahren nach einem der vorstehenden Ansprüche, dadurch gekennzeichnet, daß es sich beim Magnesiumdihalogenid (1) um Magnesiumdichlorid handelt.

12. Verfahren nach einem der Ansprüche 3, 5, 7 und 11, dadurch gekennzeichnet, daß das $MgCl_2$ (1) mit dem 4-Phenylphenol (6) und dem Titan-tetra-n-butoxid (3) vor dem Kontakt mit dem Methylbenzoat (2) in Kontakt gebracht wird.

13. Verfahren des nach einem der Ansprüche 1 bis 12 erhaltenen Katalysators zur Polymerisation von alpha-Olefinen, insbesondere zur Herstellung von Polypropylen.

**Revendications**

1. Procédé de préparation d'un catalyseur convenant pour la polymérisation d'oléfines comprenant le fait de faire réagir (1) un dihalogénure de magnésium, (2) un ester de l'acide benzoïque et (3) un alcoxytitanate pour former un premier constituant de catalyseur, puis de faire réagir ce premier constituant de catalyseur avec (4) un halogénure d'organoaluminium, puis de faire réagir le produit solide obtenu avec (5) un agent d'halogénation comprenant un halogénure de titane, caractérisé en ce que dihalogénure de magnésium (1) est associé à 0,48 à 1,1 mole de méthanol par mole de dihalogénure de magnésium.

2. Procédé selon la revendication 1, caractérisé en ce qu'on utilise également un phénol (6) dans la préparation de ce premier constituant de catalyseur.

3. Procédé selon la revendication 2, caractérisé en ce que ce phénol (6) est un 4-phénylphénol.

4. Procédé selon l'une quelconque des revendications précédentes, caractérisé en ce que cet alcoxytitane (3) est un composé répondant à la formule $Ti(OR)_4$ dans laquelle chacun des R est choisi individuellement parmi des groupes alkyle en $C_1$ à $C_{20}$.

5. Procédé selon la revendication 4, caractérisé en ce que cet alcoxytitane (3) est du tétra-n-butylate de titane.

6. Procédé selon l'une quelconque des revendications précédentes, caractérisé en ce que cet halogénure d'organoaluminium (4) est le sesquichlorure d'éthylaluminium.

7. Procédé selon l'une quelconque des revendications précédentes, caractérisé en ce que cet ester de l'acide benzoïque (2) est le benzoate d'éthyle.

8. Procédé selon l'une quelconque des revendications précédentes, caractérisé en ce que cet agent d'halogénation (5) est le tétrachlorure de titane.

9. Procédé selon la revendication 1, caractérisé en ce que cet agent d'halogénation (5) est choisi parmi $TiCl_4$, $HSiCl_3$ et $SiCl_4$.

10. Procédé selon la revendication 9, caractérisé en ce que le rapport molaire de $TiCl_4$ à $SiCl_4$ est dans l'intervalle de 3/1 à 4,5/1 lorsque le rapport molaire de $HSiCl_3$ à $SiCl_4$ est dans l'intervalle de 2,5/1 à 4/1.

11. Procédé selon l'une quelconque des revendications précédentes, caractérisé en ce que ce dihalogénure de magnésium (1) est le dichlorure de magnésium.

12. Procédé selon l'une quelconque des revendications 3, 5, 7 et 11, caractérisé en ce que $MgCl_2$ (1) est mis en contact avec ce 4-phénylphénol (6) et avec ce tétra-n-butylate de titane (3) avant d'être mis en contact avec ce benzoate d'éthyle (2).

13. Utilisation du catalyseur tel qu'obtenu dans l'une quelconque des revendications 1 à 12, pour la polymérisation d'alpha-oléfines, en particulier pour préparer du polypropylène.